# EUROPEAN PATENT SPECIFICATION

(11) **EP 1 479 701 B1**
(45) Date of publication and mention of the grant of the patent: **05.11.2008**
(21) Application number: 03707164.4
(22) Date of filing: 28.02.2003
(51) Int. Cl.: C08F 38/00

(54) **ACETYLENE POLYMERS SHOWING REVERISBLE CHANGE IN ABSORPTION AND EMISSION SPECTRA**
ACETYLENPOLYMERE MIT REVERSIBLER ÄNDERUNG DES ABSORPTIONS- UND EMISSIONSSPEKTRUMS
POLYMERES D'ACETYLENE PRESENTANT UNE MODIFICATION REVERSIBLE DANS DES SPECTRES D'ABSORPTION ET D'EMISSION

(30) Priority: 28.02.2002 JP 2002054765
(43) Date of publication of application: 24.11.2004
(73) Proprietor: National Institute of Advanced Industrial Science and Technology, Tokyo 100-8921 (JP)
(72) Inventor: TABATA, Masayoshi, Sapporo-shi, Hokkaido 062-0020 (JP)
(74) Representative: Hayes, Adrian Chetwynd
(86) International application number: PCT/JP2003/002285
(87) International publication number: WO 2003/072615

(56) References cited:
- JP-A- 7 258 344
- JP-A- 7 292 037
- JP-A- 9 176 243
- JP-A- 63 275 614

## Description

### Technical Field

The invention relates to a novel polymer showing reversible changes in absorption and emission spectra or, more particularly, to a polymer comprising chain polymers of a substituted acetylene and showing reversible changes in absorption and emission spectra owing to changes of cis-trans structures of the polymeric molecular chains and changes of the agglomerate structure of polymeric molecular chains.

### Background Technology

In the prior art, substituted polyacetylenes obtained by polymerization of a substituted acetylene are known to cause structural changes of double bonds between the cis form and the trans form. However, there have been problems that polyacetylenes are easy to be oxidized with the oxygen in the air and that it is difficult to control the agglomerate structure of the polymeric molecular chains.

A polyacetylene having the following structure, 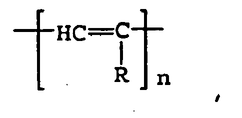 is disclosed in "Polymer Processing", vol. 50, No. 5, pages 221-223 (2001). Here, R denotes a *p*-nitrophenyl group and p-(3-methylbutoxy)phenyl group.

In the case where the substituent group R is a *p*-nitrophenyl group, it is known that polymer molecules with the cis-transoid structure are converted into molecules with the trans-transoid structure and the peak wavelength of the absorption spectrum is shifted from 430 nm to 460 nm by pressure application, while the wavelength is shifted from 430 nm to 440 nm by heating.

Further, "Macromolecules", vol. 34, No. 11, pages 3776-3782 (2001) contains a report describing that in the case where the R is a *p*-(3-methylbutoxy)phenyl group in the above-given structural formula, cis-trans structure changes are caused by pressure application and the absorption peak wavelength is shifted from 430 nm to 460 nm. It is also reported that the above-mentioned polymer with the cis structure forms an agglomerate structure and this agglomerate structure undergoes a structural change by pressurization resulting in peak wavelength shift of the absorption spectrum from 490 nm to 450 nm.

However, although these prior art documents describe that the above-mentioned polymer shows absorption spectrum changes owing to the change from the cis-transoid structure to the trans-transoid structure, they do not mention any method for recovering the cis-transoid structure after the change to the trans-transoid structure, that is a method for reversibly changing the spectra between the cis-transoid structure and the trans-transoid structure.

Since such a polymer as described above has an absorption spectrum and an emission spectrum changing depending on the structural changes, if the structural changes between the cis-transoid structure and the trans-transoid structure takes place reversibly, it is expected that the above-mentioned polymer can be used for a variety of coloring materials and optical materials based on such characteristics.

JP 63275614 A discloses a substituted polyacetylene which is solvent-insoluble or has a weight-average MW> 50000 comprising structural units of -CR₁=CR₂-, where R₁ is a substituted benzene ring or substituted pyridine ring.

JP-A-7258344 discloses a polymer derived from monomers of the formula HC≡CR, where R is an optionally substituted aliphatic, alicyclic, aromatic or araliphatic hydrocarbon group or a heterocyclic group, that are polymerised in the presence of a transition metal compound.

JP-A-7292037 discloses an optically active acetylene derivative, more specifically a polymer derived from acetylene substituted with a phenyl group, which is in turn substituted with an optically active group.

JP-A-9176243 discloses a polymer derived from various substituted acetylene monomers.

### Disclosure of the Invention

In consideration of the above-mentioned present situations of prior art technology, the object of the invention is to provide a novel polymer capable of reversibly changing between the cis-transoid structure and the trans-transoid structure and showing reversible changes in shapes and peak wavelengths of the absorption and emission spectra.

A first embodiment of the invention provides a polymer represented by the structural formula (1), 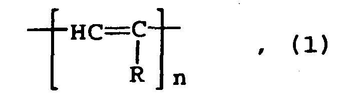 (in the formula, n is a positive integer, preferably 30 or larger; and R denotes -C₆H₄-OCₓH₂ₓ₊₁, -C₆H₄-N=NCOCₓH₂ₓ₊₁, -C₆H₄-NHCOCₓH₂ₓ₊₁, *o*-trifluoromethylphenyl, and *o*-(2-thienyl)phenyl; x being a positive integer and -C₆H₄- including *o*-, *m*- and *p*-phenylene groups), wherein the polymer comprises molecular chains in a regularly spiraled structure with a pitch reversibly changeable by imparting a stimulation or by changing the stimulation intensity and exhibits reversible changes in shapes and peak wavelengths of the absorption and emission spectra.

In a specific aspect of the first embodiment, the double bond portion has the cis-transoid structure and are reversibly changed between the cis-transoid structure and the trans-transoid structure by imparting a stimulation selected from the group consisting of heat, pressure, electromagnetic waves (wavelength 10 nm or longer), high energy radiations, and magnetic fields. Consequently, the present invention provides a method for reversibly changing the structures between the cis-transoid and the trans-transoid by imparting these stimulations to the above-mentioned polymer.

A second embodiment of the present invention provides a polymer represented by the above-given structural formula (1), wherein the polymer has molecular chains in a regularly spiraled structure with a pitch reversibly changeable by imparting a stimulation selected from the group consisting of heat, pressure, electromagnetic waves, light, radiations, and magnetic fields and accordingly the polymer has reversibly changeable shapes and peak wavelengths of the absorption and emission spectra owing to the changes of the pitch of the spiral structure with or without changes in the agglomerate structure of polymer molecules.

A third embodiment of the present invention provides a polymer defined by the above-given structural formula (1) and having molecular chains in a regularly spiraled structure, wherein the adjacent polymer molecules form an agglomerate structure and the agglomerate structure is reversibly changeable to another agglomerate structure by stimulations and the polymer has reversibly changeable shapes and peak wavelengths of the absorption and emission spectra owing to the agglomerate structure changes. The stimulation source to be used in this case is selected from the group consisting of heat, pressure, electromagnetic waves, light, radiations, magnetic fields, and surrounding media.

In another particular aspect of the present invention, the above-mentioned agglomerate structure can be the pseudo-hexagonal or orthorhombic crystalline structure and is reversibly changeable between the said crystalline structure and an amorphous structure.

In another particular aspect of the present invention, the above-mentioned pseudo-hexagonal or orthorhombic crystalline structure is formed by agglomerate structures of the above-mentioned spiral-formed polymeric molecular chains with a diameter of 1 to 100 nm.

In a still further different particular aspect of the invention, the above-mentioned pseudo-hexagonal or orthorhombic crystalline structure is formed by agglomeration of the above-mentioned spiral-formed polymeric molecular chains with a spiral pitch of 0.2 to 0.5 nm.

In a still further different particular aspect of the present invention, the above-mentioned spiral-formed polymeric molecular chains in the above-mentioned pseudo-hexagonal or orthorhombic crystalline structure has the distance between the center axes in the range of 0.5 to 200 nm.

In a still further different particular aspect of the polymer of the present invention, the shape and intensity changes are reversely caused in the absorption and emission spectra in a wavelength range of 190 to 2500 nm.

In a still further different particular aspect of the polymer of the present invention, the shift of the maximum peak wavelengths of the above-mentioned absorption and emission spectra is caused in a wavelength range of 190 to 2500 nm.

### Brief Description of the Drawings

Fig. 1 is a schematic perspective view for illustrating the pseudo-hexagonal crystalline structure which is an embodiment of the agglomerate structure of a polymer of the present invention.
Fig. 2 is a figure showing an NMR chart of the substituted polyacetylene obtained from the monomer synthesized in Example 1.
Fig 3A is a figure showing a diffusion-reflection visible-to-infrared spectrum of the polyacetylene obtained by polymerization in Example 1 observed before the solvent treatment and Fig 3B is a figure showing a diffusion-reflection visible-to-infrared spectrum of the polymer after exposure to chloroform vapor.

### Best Mode for Practicing the Invention

Hereinafter, the present invention will be described in detail.

As described above, in the first to the third embodiments of the present invention, a polymer represented by the structural formula (1) is used. With respect to the polymer, the substituent group R is exemplified, as described above, by -C₆H₄-OCₓH₂ₓ₊₁, -C₆H₄-N=NCOCₓH₂ₓ₊₁, -C₆H₄-NHCOCₓH₂ₓ₊₁, *o*-trifluoromethylphenyl, o-(2-thienyl)phenyl and the like. In the above-given formula, x is a positive integer and -C₆H₄- includes *o*-, *m*- and *p*-phenylene groups. The reversible changes between the cis-transoid structure and the trans-transoid structure can be achieved by using these specified substituent groups for the substituent group R. That is, the above-mentioned structural changes can be achieved by using the substituent group R allowing close positioning one another so as to form bonds or interaction by n-n bond, hydrogen bond, bond owing to van der Waals force.

Above all, *p*-C₆H₁₃O-phenyl, *p*-C₆H₁₃-CONH-phenyl are suitable for the R in terms of excellent reversibility of changes between the cis-transoid structure and the trans-transoid structure.

Further, with respect to the above-mentioned polymer, the adjacent polymeric molecular chains are agglomerated owing to the interaction to form the agglomerate structure and in terms of excellent reversibility of changes in the agglomerate structure formation, *p*-C₆H₁₃O-phenyl and *p*-C₆H₁₃-CONH-phenyl are particularly suitable for the substituent group R.

The average molecular weight of the above-mentioned polymer is not particularly limitative but it is preferably in the range from one thousand to several ten-millions on the basis of the number-average molecular weight Mn or, more preferably, in the range from ten thousands to several millions.

The polymer of the present invention is reversibly changeable between the cis-transoid structure defined by the following structural formula (2) and the trans-transoid structure defined by the following structural formula (3). The reversible changes can be caused, as it will be described later, by imparting a stimulation selected from the group consisting of heat, light, electromagnetic waves, radiations, pressure, magnetic fields and the like. For example, the cis-transoid structure having a spiral structure is changed to a straight chain state trans-transoid structure by heating or pressurizing.

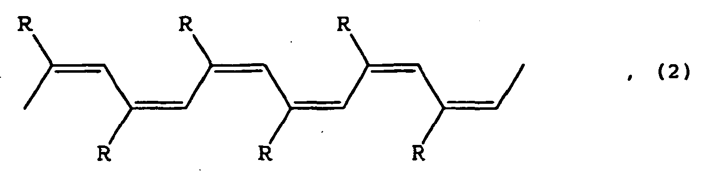

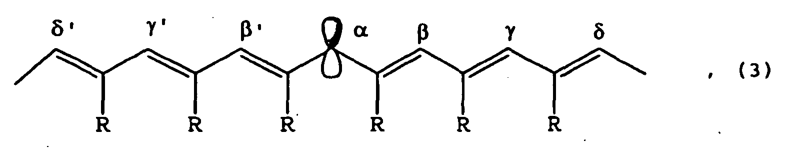

Owing to such a change from the cis-transoid structure to the trans-transoid structure, as described above, the shapes and the peak wavelengths of the absorption and emission spectra are changed. Further, the polymer of the present invention is changed from the trans-transoid structure to the cis-transoid structure by controlling the above-mentioned pressurizing and heating conditions. That is, cis-trans structure changes are promoted reversibly.

The stimulation sources to reversibly cause the above-mentioned structure changes include, as described above, various types of energy sources such as heat, light, electromagnetic waves, radiations, pressure, magnetic fields and the like, but heat at a temperature in the range from room temperature to 200 °C, light from UV light to IR light, and pressure of about 5 to 500 kg/cm² are preferable to be employed.

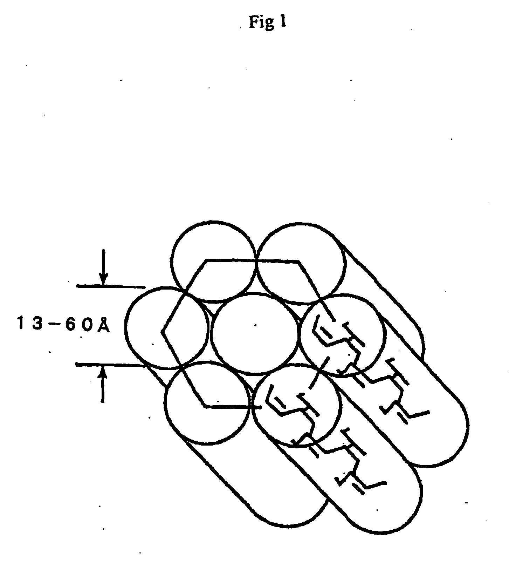

The molecules of the polymer of the present invention have the above-mentioned cis-transoid structure and spiral-formed molecular shape. The polymer molecules in the spiral-formed shape are, as illustrated in Fig. 1, agglomerated in adjacent polymeric molecular chains to form the agglomerate structure. The agglomerate structure is, as shown in Fig. 1, the pseudo hexagonal or orthorhombic crystalline structure.

In the case where the crystalline structure is formed as shown in Fig. 1, as described above, when the steric structure of the respective polymeric molecular chains is changed from the cis-transoid structure to the trans-transoid structure, the shapes and peak wavelengths of the absorption and emission spectra are changed and also when the agglomerate structure is changed, the shapes and peak wavelengths of the absorption and emission spectra are changed. The agglomerate structure change is the change from the above-mentioned crystalline structure to the amorphous structure and this agglomerate structure change also proceed reversibly. The changes in the agglomerate structure are caused by a method of changing the surrounding medium, for example, by alteration of the solvent relative to the polarity or affinity with the polymer or kind of the solvent or by imparting a stimulation mentioned above such as heat, light, electromagnetic waves, radiations, pressure, magnetic fields and others.

When agglomeration is formed to have the aforementioned crystalline structure, it is appropriate that the diameter of the spiral structure in each of the polymeric molecular chains is 0.5 to 100 nm, the pitch of the spiral is 0.2 to 0.5 nm and the distance between center axes of the polymeric molecular chains is 1 to 200 nm.

The preparation method of the polymer of the present invention is not particularly limitative, and the polymer can be obtained by polymerizing the substituted acetylene having the structure defined by the structural formula (4),

CH≡CR , (4)

(in the formula, R has the same meaning as described above) by a conventional polymerization method. The polymerization methods of a substituted acetylene are described in "Polymer Journal", vol. 22, page 1105 (1990), "Macromolecules", vol. 34, No. 11, page 3776 (2001), Japanese Patent Kokai No. 63-275614, Japanese Patent Kokai No. 63-275613 and elsewhere and, in conducting the polymerization, it is preferable to keep a monomer mixture containing a rhodium complex as a polymerization catalyst at a temperature of 20 °C or higher. The rhodium complex is exemplified by [Rh(norbornadiene)Cl]₂, [Rh(cyclooctadiene)Cl]₂, [Rh(bis-cyclooctene)Cl]₂ and the like of which [Rh(norbornadiene)Cl]₂ is particularly preferable.

In order to obtain the aforementioned polymer having the cis-transoid structure, it is desirable in conducting the polymerization to use, as the polymerization solvent, a poor solvent incapable of dissolving the polymer including, for example alcohols such as methanol, ethanol and the like, water and triethylamine as well as solvent mixtures thereof. To say generally, a solvent having lone pair electrons in the molecular structure is preferable as the polymerization solvent.

The synthesis method of the substituted acetylene defined by the above-given structural formula (4) is not particularly limitative and a substituted acetylene can be obtained, for example, by the methods described by R.D. Amato, et al, in "Macromolecules", vol. 31, page 8660 (1998).

With respect to the novel polymer of the present invention, as described above, owing to the reversible changes in the polymeric molecular chains between the cis-transoid structure and the trans-transoid structure, the peak wavelengths and the shapes of the absorption and emission spectra are reversibly changed. As described above, owing to the agglomerate structure change, the peak wavelengths and the shapes of the absorption and emission spectra are also reversibly changed.

Accordingly, the polymer of the present invention is satisfactorily used in various optical applications and electronic applications such as a color changeable material, a material forming an electron donating layer of an organic EL device, a non-linear optical material, an organic magnetic material, an organic electroconductive material and the like.

Hereinafter, the present invention is described in more details by way of Examples but the present invention is never limitative thereby.

### Example 1

### (Synthesis of monomer compound)

A reaction mixture obtained by adding and dissolving 14.8 g of sodium hydroxide, 50 ml of dimethylsulfoxide (DMSO) and 22.0 g of p-iodophenol in 300 ml of acetone was admixed with 28.1 g (0.17 mole) of hexyl bromide and a reaction was conducted by heating under reflux for 24 hours. Thereafter, a large volume of distilled water was added thereto to cause separation into two phases from which the reaction product was extracted into an ether layer by adding 100 ml of diethyl ether followed by washing of the diethyl ether layer with distilled water. Thereafter, the ether layer was dried over anhydrous magnesium sulfate followed by filtration and, after removal of the solvent, vacuum drying was undertaken at 128 °C. The yield of the thus obtained intermediate product was 90%.

0.09 Mole of the above-mentioned intermediate product was dissolved in 300 ml of triethylamine to which 0.111 g of dichlorobis(triphenylphosphine) palladium(II) and 0.099 g of copper iodide(I) CuI were added and then a reaction was conducted by heating under reflux for 3 hours. After removal of the solvent on an evaporator, diethyl ether was added to the reaction mixture to extract the thus produced compound. This ether solution was washed three times with 300 ml of distilled water and then dried over anhydrous magnesium sulfate for 24 hours followed by filtration and removal of the solvent. The compound obtained in this way was added with 50 ml of toluene and 1.68 g (0.03 mole) of potassium hydroxide, stirred for 4 hours under reflux and, after removal of the solvent on an evaporator, washed with 300 ml of distilled water and the organic layer was taken out therefrom and the product was extracted into diethyl ether. This ether layer was dried over anhydrous magnesium sulfate for 24 hours followed by filtration and removal of the solvent, and vacuum drying was undertaken at 89 °C. The yield of the product obtained in this way was 43%.

The compound obtained in this way was subjected to ¹H-NMR spectrum measurement and was found to contain the structure in the brackets indicated below.

¹H-NMR δ(ppm) = 0.8[CH₃, 3H], 1.4[(CH₂)₄, 8H], 1.6[CH₂, 2H], 3.0[≡C-H, 1H], 3.6[OCH₂, 2H], 6.5[phenyl, 4H]

### (Synthesis of polymer)

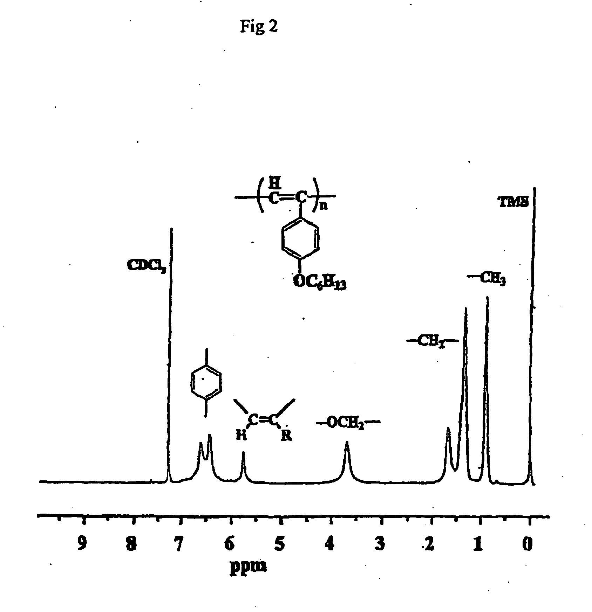

One of the leg portions of an inversely U-formed glass tube reactor was charged with 2.1×10⁻³ mole of the monomer synthesized by the above-described method and 50 ml of dried triethylamine while the other leg portion of the said inversely U-formed glass tube was charged with a catalyst [Rh(norbornadiene)Cl]₂ in a molar amount of 1/150 relative to the molar amount of the above-mentioned monomer and 50 ml of dried trimethylamine and the contents were mixed together by turning the glass tube upside down to initiate the reaction. The reaction was carried out at 20 °C for 4 hours. The reaction was terminated by adding an excess amount of methanol and the yellow polymer precipitated was taken by filtration and washed with methanol followed by vacuum drying for 24 hours. The thus obtained polymer was subjected to the measurements of the number-average molecular weight Mn, composition by elementary analysis and ¹H-NMR spectrum. The chart of the ¹H-NMR spectrum of this compound is shown in Fig. 2. The results of the measurements included Mn=65000, elementary composition of C₁₄H₁₈O₁ and the ¹H-NMR spectrum with δ(ppm)=0.8 [CH₃, 3H], 1.4[(CH₂)₄, 8H], 1.6[CH₂, 2H], 3.6[OCH₂, 2H], 5.7[=C-H, 1H], 6.5[phenyl, 4H].

The results of the polymerization reaction using ethanol in place of triethylamine as the polymerization solvent in the above-mentioned polymerization method were also satisfactory. Needless to say, a solvent mixture of triethylamine and ethanol could be used.

### (Reversible changes in absorption and emission spectra)

The absorption and emission spectra of the polymer obtained in the above-mentioned polymerization method were measured while tetrahydrofuran was used as the solvent and the polymer concentration was adjusted to about 10⁻⁵ to 10⁻⁷ mole/liter to find that the absorption peak wavelength was 265 nm and the emission peak wavelength was 320 nm.

After pressurization of the above-mentioned polymer under a pressure of 200 kg/cm², the absorption and emission spectra were again measured with a polymer concentration brought to about 10⁻⁵ to 10⁻⁷ mole/liter by using tetrahydrofuran as the solvent to find a shift of the absorption peak wavelength to about 330 nm and of the emission peak wavelength to 380 nm.

Next, the polymer whose absorption peak wavelength and the emission peak wavelength were shifted as described above was further stimulated by heating at 120 °C for 60 minutes and the absorption and emission spectra were again measured in tetrahydrofuran used as the solvent and the polymer concentration was adjusted to about 10⁻⁵ to 10⁻⁷ mole/liter to find that the emission peak wavelength was returned to 320 nm.

### Example 2

### (Changes in the reflection spectrum of solid polymer by solvent treatment)

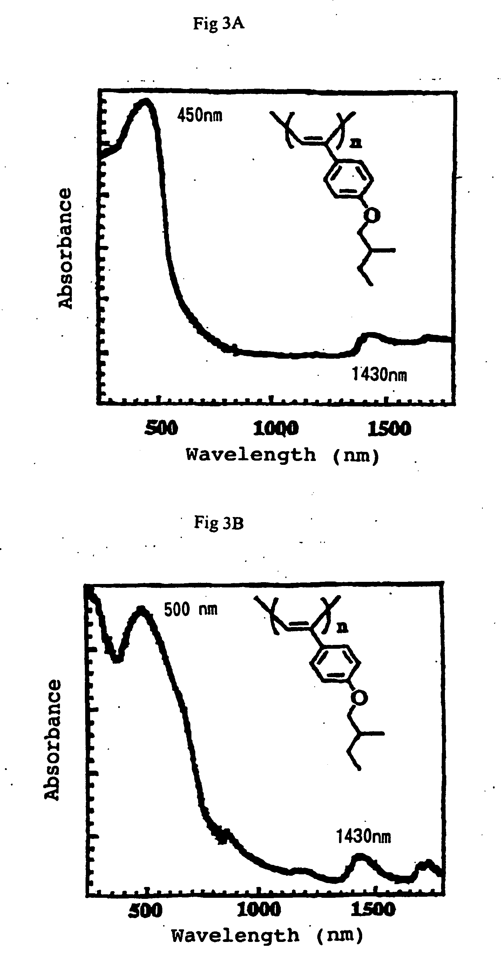

When yellow polymer obtained by the same polymerization method as in Example 1, except that an acetylene compound defined by the structural formula (4) wherein R was a *p*-(3-methylbutoxy) group was used as the monomer, was exposed to chloroform vapor for a short time, the polymer was turned black. The reflection spectra of the yellow solid body and the black solid body are shown in Fig. 3A and Fig. 3B, respectively.

A shift was found there in the absorption maximum from 450 nm in the yellow polymer to 500 nm in the black polymer with an increase in the absorption intensity in the range of from 400 nm to 1800 nm.

### (Conversion from the black polymer to the yellow polymer by re-precipitation from solvent)

While the above-mentioned yellow polymer turned black by exposure to chloroform vapor for a short time, when the black polymer was dissolved in a large volume of chloroform and methanol, a poor solvent for the polymer, was added to the resulting solution to precipitate the polymer, a yellow solid was obtained. The reflection spectrum of the yellow solid polymer was the same as the spectrum of Fig. 3A.

### Industrial Applicability

By virtue of the above-mentioned specific substituent group R possessed therein, the acetylene polymer according to the present invention has a cis-transoid structure in the double bond portion and the molecular chain thereof takes a regular spiral structure. When the polymer is imparted with a physical or chemical stimulation such as heat, light, electromagnetic waves, X-rays, γ-rays, pressure, magnetic fields, solvent treatments and the like, the cis-transoid structure is changed to the trans-transoid structure, this change proceeding reversibly.

According to the present invention, therefore, it is possible to obtain a polymer exhibiting reversible changes in the shapes and peak wavelengths of the absorption and emission spectra by means of the reversible changes between the cis-transoid structure and the trans-transoid structure.

According to the present invention, therefore, there can be provided a novel organic material capable of reversibly changing the optical properties, electric properties and electromagnetic properties possibly providing a material having usefulness in the optical applications and electronics applications.

Further, the polymer of the present invention constitutes an agglomerate structure by the agglomeration of a plurality of polymeric molecular chains and this agglomerate structure is also changeable by imparting a stimulation including changes in the nature of the medium such as the polarity of the solvent and the like. Accordingly, the reversible changes in the shapes and peak wavelengths of the absorption and emission spectra are caused also by the changes in the agglomerate structure so that a novel material is obtained which exhibits great reversible changes in the optical properties, electric properties and others not only by the aforementioned reversible changes between the cis-transoid stricture and trans-transoid structure but also by the reversible changes in the agglomerate structure. In the polymer by polymerization with a rhodium catalyst employed in the present invention, aromatic groups with a greatly decreased π-electron density on the main chains are introduced as the side chains so that, by means of the decrease in the π-electron density on the main chains, an effect to inhibit the oxidation reaction by the oxygen in the air can be obtained.

## Claims

1. A substituted acetylene polymer represented by the structural formula, 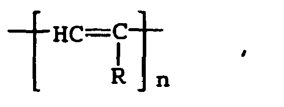 (in the formula, n is a positive integer of 30 or larger; and the substituent group R is a group selected from the group consisting of -C₆H₄-OCₓH₂ₓ₊₁, -C₆H₄-N=NCOCₓH₂ₓ₊₁, -C₆H₄-NHCOCₓH₂ₓ₊₁, *o*-trifluoromethylphenyl and *o*-(2-thienyl)phenyl, x being a positive integer, and -C₆H₄- including *o*-, *m*- and *p*-phenylene groups)
wherein the polymer comprises molecular chains in a regularly spiraled structure with a pitch reversibly changeable by imparting a stimulation or by changing the intensity thereof and exhibits reversible changes in the shape or peak wavelength of the absorption spectrum or the emission spectrum.

2. The polymer described in claim 1 wherein the double bond portion of the polymeric molecular chains has a cis-transoid structure in a stimulation-free condition and the cis-transoid structure is reversibly changed to a trans-transoid structure by imparting a stimulation or by changing the intensity thereof.

3. The polymer described in claim 1 wherein the polymeric molecular chains have an agglomerate structure in a stimulation-free condition and the agglomerate structure of the molecular chains is reversibly changed by imparting a stimulation or by changing the intensity thereof.

4. The polymer described in claim 3 wherein the said agglomerate structure is a pseudo-hexagonal or an orthorhombic crystalline structure and the reversible changes of the agglomerate structure proceed between the said crystalline structure and an amorphous structure.

5. The polymer described in claim 4 wherein the said pseudo-hexagonal or orthorhombic crystalline structure is formed by agglomeration of the spiral-formed polymeric molecular chains having a diameter of 1 nm to 100 nm.

6. The polymer described in claim 5 wherein the said spiral-formed polymeric molecular chains forming the said pseudo-hexagonal or orthorhombic crystalline structure have a pitch in the range of 0.3 nm to 0.5 nm.

7. The polymer described in claim 6 wherein the adjacently spiral-formed polymeric molecular chains forming the said pseudo-hexagonal or orthorhombic crystalline structure have a distance between the spiral axes in the range of 1 nm to 200 nm.

8. The polymer described in claim 1 wherein the reversible changes in the shape or intensity of the absorption spectrum or the emission spectrum proceed in a wavelength range of 190 nm to 2500 nm.

9. The polymer described in claim 1 wherein the said reversible changes in the peak wavelength of the absorption spectrum or the emission spectrum proceed in a wavelength range of 190 nm to 2500 nm.

## Patentansprüche

1. Substituiertes Acetylenpolymer, das der Strukturformel 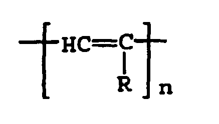 entspricht (in der Formel ist n eine positive ganze Zahl größer als oder gleich 30; und die Substituentengruppe R ist eine Gruppe, die aus der Gruppe ausgewählt wird, die aus -C₆H₄-OCₓH₂ₓ₊₁, -C₆H₄-N=NCOCₓH₂ₓ₊₁, -C₆H₄-NHCOCₓH₂ₓ₊₁, o-Trifluormethylphenyl und o-(2-Thienyl)phenyl besteht, wobei x eine positive ganze Zahl ist und -C₆H₄- o-, m- und p-Phenylengruppen einschließt),
wobei das Polymer Molekülketten mit einer regelmäßig spiralförmigen Struktur mit einer Ganghöhe umfasst, die reversibel änderbar ist, indem man eine Anregung einwirken lässt oder indem deren Intensität geändert wird, und reversible Änderungen der Form oder der Peakwellenlänge des Absorptionsspektrums oder des Emissionsspektrums zeigt.

2. Polymer nach Anspruch 1, wobei der Doppelbindungsanteil der polymeren Molekülketten eine cis-transoid-Struktur in einem anregungsfreien Zustand hat und die cis-transoid-Struktur reversibel in eine trans-transoid-Struktur wechselt, indem man eine Anregung einwirken lässt oder indem deren Intensität geändert wird.

3. Polymer nach Anspruch 1, wobei die polymeren Molekülketten in einem anregungsfreien Zustand eine Agglomeratstruktur haben und die Agglomeratstruktur der Molekülketten reversibel geändert wird, indem man eine Anregung einwirken lässt oder indem deren Intensität geändert wird.

4. Polymer nach Anspruch 3, wobei die Agglomeratstruktur eine pseudohexagonale oder eine orthorhombische Kristallstruktur ist und die reversiblen Änderungen der Agglomeratstruktur zwischen dieser Kristallstruktur und einer amorphen Struktur stattfinden.

5. Polymer nach Anspruch 4, wobei die pseudohexagonale oder orthorhombische Kristallstruktur durch die Agglomeration der spiralförmigen Molekülketten, die einen Durchmesser von 1 nm bis 100 nm haben, gebildet wird.

6. Polymer nach Anspruch 5, wobei die spiralförmigen polymeren Molekülketten, die die pseudohexagonale oder orthorhombische Kristallstruktur bilden, eine Ganghöhe im Bereich von 0,3 nm bis 0,5 nm haben.

7. Polymer nach Anspruch 6, wobei die benachbarten spiralförmigen polymeren Molekülketten, die die pseudohexagonale oder orthorhombische Kristallstruktur bilden, zwischen den Achsen der Spiralen einen Abstand im Bereich von 1 nm bis 200 nm haben.

8. Polymer nach Anspruch 1, wobei die reversiblen Änderungen der Form oder der Intensität des Absorptionsspektrums oder des Emissionsspektrums in einem Wellenlängenbereich von 190 nm bis 2500 nm stattfinden.

9. Polymer nach Anspruch 1, wobei die reversiblen Änderungen der Peakwellenlänge des Absorptionsspektrums oder des Emissionsspektrums in einem Wellenlängenbereich von 190 nm bis 2500 nm stattfinden.

## Revendications

1. Polymère d'acétylène substitué représenté par la formule structurelle, 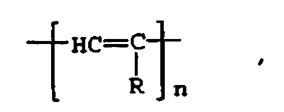 (dans la formule, n est un nombre entier positif de 30 ou plus; et le groupe substituant R est un groupe choisi dans le groupe composé de -C₆H₄-OCₓH₂ₓ₊₁, -C₆H₄-N=NCOCₓH₂ₓ₊₁, -C₆H₄-NHCOCₓH₂ₓ₊₁, *o*-trifluorométhylphényle et *o*-(2-thiényl)phényle, x étant un nombre entier positif, et -C₆H₄- comprenant les groupes *o*-, *m*- et *p*-phénylène) le polymère comprenant des chaînes moléculaires dans une structure à spirale régulière avec un pas pouvant être modifié de manière réversible en communiquant une stimulation ou en modifiant son intensité et présentant des changements réversibles dans la forme ou la longueur d'onde pic du spectre d'absorption ou du spectre d'émission.

2. Polymère selon la revendication 1, dans lequel la portion de double liaison des chaînes moléculaires polymère a une structure cis-transoïde dans une condition dépourvue de stimulation et la structure cis-transoïde est modifiée de façon réversible en une structure trans-transoïde en communiquant une stimulation ou en modifiant son intensité.

3. Polymère selon la revendication 1, dans lequel les chaînes moléculaires polymère ont une structure d'agglomérats dans une condition dépourvue de stimulation et la structure d'agglomérats des chaînes moléculaires est modifiée de manière réversible en communiquant une stimulation ou en modifiant son intensité.

4. Polymère selon la revendication 3, dans lequel ladite structure d'agglomérats est une structure cristalline pseudo-hexagonale ou orthorhombique et les changements réversibles de la structure d'agglomérats ont lieu entre ladite structure cristalline et une structure amorphe.

5. Polymère selon la revendication 4, dans lequel ladite structure cristalline pseudo-hexagonale ou orthorhombique est formée par agglomération des chaînes moléculaires polymère formées en spirale ayant un diamètre de 1 nm à 100 nm.

6. Polymère selon la revendication 5, dans lequel lesdites chaînes moléculaires polymère formées en spirale formant ladite structure cristalline pseudo-hexagonale ou orthorhombique ont un pas dans la gamme de 0,3 nm à 0,5 nm.

7. Polymère selon la revendication 6, dans lequel les chaînes moléculaires polymère formées en spirale de manière adjacente formant ladite structure cristalline pseudo-hexagonale ou orthorhombique ont une distance entre les axes spiraux dans la gamme de 1 nm à 200 nm.

8. Polymère selon la revendication 1, dans lequel les changements réversibles de forme ou d'intensité du spectre d'absorption ou du spectre d'émission ont lieu dans une gamme de longueurs d'onde de 190 nm à 2 500 nm.

9. Polymère selon la revendication 1, dans lequel lesdits changements réversibles dans la longueur d'onde pic du spectre d'absorption ou du spectre d'émission ont lieu dans une gamme de longueurs d'onde de 190 nm à 2 500 nm.
